# EUROPEAN PATENT APPLICATION

(11) **EP 4 711 421 A1**
(43) Date of publication of application: **18.03.2026**
(21) Application number: 24803310.2
(22) Date of filing: 03.04.2024
(51) Int. Cl.: C08L 101/02, C08K 7/02, C08L 1/02, C08L 77/00

(54) **RESIN COMPOSITION**

(30) Priority: 10.05.2023 JP 2023077890
(71) Applicant: Panasonic Intellectual Property Management Co., Ltd., Kadoma-shi, Osaka 571-0057 (JP)
(72) Inventor: SEKI, Ryouhei, Kadoma-shi, Osaka 571-0057 (JP); TOYOTA, Kei, Kadoma-shi, Osaka 571-0057 (JP); FUKU, Ami, Kadoma-shi, Osaka 571-0057 (JP); IMANISHI, Masayoshi, Kadoma-shi, Osaka 571-0057 (JP); ANDO, Kota, Kadoma-shi, Osaka 571-0057 (JP)
(74) Representative: Novagraaf International SA
(86) International application number: PCT/JP2024/013712
(87) International publication number: WO 2024/232195

(57) **Abstract**

A resin composition is a resin composition including: a thermoplastic resin; and a carbonyl group that is not based on the thermoplastic resin, in which the thermoplastic resin and the carbonyl group are chemically bonded to each other.

## Description

### TECHNICAL FIELD

The present disclosure relates to a resin composition containing a thermoplastic resin as a raw material and having a high elastic modulus at high temperatures.

### BACKGROUND ART

Generally, thermoplastic resins are so highly productive that they can be subjected to short time molding, such as injection molding, and so easy to recycle that the molded body can be melted again to be molded again into any shape, and therefore widely used in general-purpose resin compositions. Polyamides and the like, which are thermoplastic resins having particularly excellent strength, are widely used as so-called engineering plastics in industrial parts requiring high durability such as automobile interior parts. However, there has been a problem that at high temperatures close to the upper limit of the heat-resistant temperature range of the constituent thermoplastic resin, the resin composition is deformed when a force is applied thereto, and then remains deformed and cannot maintain its original shape even after the force is released therefrom, that is, the resin composition is plastically deformed.

As a means for imparting a so-called elastic deformation characteristic, in which a resin composition is deformed when a force is applied thereto, but the deformed resin composition is restored after the force is released therefrom, for example, PTL 1 discloses that a resin composition obtained by mixing a polyrotaxane, a thermosetting resin, and a curing agent is flexible, and can be restored to its original shape even after being deformed.

### Citation List

### Patent Literature

PTL 1: Japanese Patent No. 6380942

### SUMMARY OF THE INVENTION

However, when a polyrotaxane is mixed to impart flexibility, the resin composition is easily deformed even at normal temperature. Therefore, there has been limitation in applying polyrotaxanes to industrial parts or the like, which are required to maintain its shape at normal temperature even when a force is applied thereto.

The present disclosure has been made as a result of earnest efforts by the inventors in view of the above points, and an object of the present disclosure is to provide a resin composition containing a thermoplastic resin as a raw material and having a high elastic modulus at high temperatures.

The resin composition according to the present disclosure is a resin composition including: a thermoplastic resin; and a carbonyl group that is not based on the thermoplastic resin, in which the thermoplastic resin and the carbonyl group are chemically bonded to each other.

The resin composition according to the present disclosure is formed by blending a thermoplastic resin and a maleic anhydride structure-containing additive agent in a predetermined amount, powder-mixing the blend, and thermally melting and stirring or thermally melting and kneading the powder mixture. Through thermally melting and stirring or thermally melting and kneading, the maleic anhydride structure in the maleic anhydride structure-containing material is ring-opened, and the ring-opened portion is bonded to each of a functional group in the thermoplastic resin and another functional group in the thermoplastic resin, thereby forming a three-dimensional crosslinked structure between the thermoplastic resins. Thus, a resin composition having such a high elastic modulus that even after applied with a force and deformed at a high temperature, the resin composition is restored to its original shape when the force is released can be obtained.

### BRIEF DESCRIPTION OF THE DRAWINGS

Fig. 1 is a view showing an AFM image of a resin composition in Example 1.
Fig. 2 is a view showing an example of AFM-IR measurement spectrum at AFM-IR measurement point 1 in the AFM image of the resin composition in Example 1 in Fig. 1.
Fig. 3 is a view showing an example of AFM-IR measurement spectrum at AFM-IR measurement point 2 in the AFM image of the resin composition in Example 1 in Fig. 1.
Fig. 4 is a view showing an AFM image of a resin composition in Comparative Example 1.
Fig. 5 is a view showing an example of AFM-IR measurement spectrum at AFM-IR measurement point 1 in the AFM image of the resin composition in Comparative Example 1 in Fig. 4.
Fig. 6 is a view showing an example of AFM-IR measurement spectrum at AFM-IR measurement point 2 in the AFM image of the resin composition in Comparative Example 1 in Fig. 4.
Part (a) of Fig. 7 is an overhead view illustrating an example of a method for evaluating deformation and restoration at a high temperature in Examples 1 to 16 and Comparative Examples 1 to 3. Part (b) of Fig. 7 is a side view of Part (a).
Fig. 8 is Table 1, showing the parts by weight of each raw material and evaluation results in Examples 1 to 9.
Fig. 9 is Table 2, showing the parts by weight of each raw material and evaluation results in Examples 10 to 16 and Comparative Examples 1 to 3.

### DESCRIPTION OF EMBODIMENT

A resin composition according to a first aspect of the present disclosure is a resin composition including: a thermoplastic resin; and a carbonyl group that is not based on the thermoplastic resin, in which the thermoplastic resin and the carbonyl group are chemically bonded to each other.

A resin composition according to a second aspect of the present disclosure is the resin composition in the first aspect, in which, at 180°C or more and 260°C or less, the resin composition may be deformed when a compressive force or a tensile force is applied, and then restored to a shape before the force is applied when the force is released.

A resin composition according to a third aspect of the present disclosure is the resin composition in the first or second aspect, in which the thermoplastic resin may have an amino group.

A resin composition according to a fourth aspect of the present disclosure is the resin composition in the third aspect, in which the thermoplastic resin may be a polyamide.

A resin composition according to a fifth aspect of the present disclosure is the resin composition in any one of the first to fourth aspects, in which the resin composition may include an organic fibrous filler in the raw materials thereof, the thermoplastic resin and the organic fibrous filler being chemically bonded to each other, in which a chemical bond between the thermoplastic resin and the filler includes a carbonyl group that is not based on the thermoplastic resin.

A resin composition according to a sixth aspect of the present disclosure is the resin composition in any one of the first to fifth aspects, in which the carbonyl group may be a part of an ester bond.

A resin composition according to a seventh aspect of the present disclosure is the resin composition in the fifth or sixth aspect, in which the organic fibrous filler may be a cellulose fiber.

A resin composition according to an eighth aspect of the present disclosure is the resin composition in the seventh aspect, in which the cellulose fiber may be included in a weight content of 30 wt% or more and 90 wt% or less in the entire resin composition.

Hereinafter, the resin composition according to the exemplary embodiment of the present disclosure will be described in detail with reference to the accompanying drawings.

### (First exemplary embodiment)

### <Resin composition>

The resin composition according to the first exemplary embodiment is a resin composition including: a thermoplastic resin; and a carbonyl group that is not based on the thermoplastic resin, in which the thermoplastic resin and the carbonyl group are chemically bonded to each other. Specifically, the thermoplastic resin may have an amino group, and may be a polyamide, for example.

### <Method for producing resin composition>

An example of the method for producing a resin composition according to the present disclosure includes:
(A) a step of powder-mixing a thermoplastic resin and a maleic anhydride structure-containing additive agent to obtain a powder mixture; and
(B) a step of thermally melting, and simultaneously stirring and kneading, the powder mixture to obtain a resin composition.

### <(A) Step of obtaining powder mixture>

The step of obtaining a powder mixture is a step of physically mixing a pellet-like thermoplastic resin and a maleic anhydride structure-containing material that is, for example, a powder to obtain a physical mixture (powder mixture).

### <(B) Step of obtaining resin composition>

The step of obtaining a resin composition is a production process of heating and simultaneously kneading the physical mixture (powder mixture), for example, using an apparatus capable of thermally melting and mixing the mixture, such as a uniaxial kneader, a biaxial kneader, or a Banbury mixer. In the thermally melting process, for example, a terminal functional group or a part of a skeleton structure of the resin and an active site generated by ring-opening of the maleic anhydride structure react with each other so that the resin and the maleic anhydride structure-containing material are chemically bonded to each other. When a plurality of maleic anhydride structures is present in the maleic anhydride structure-containing material, a maleic anhydride structure other than the maleic anhydride structure bonded to the resin reacts with another part of the resin so that the thermoplastic resins are chemically bonded with each other through a carbonyl group derived from the maleic anhydride structure, thereby forming a three-dimensional crosslinked structure between the thermoplastic resins.

Hereinafter, the method for producing a resin composition will be described in detail.

### (1) Raw Material

### <Thermoplastic resin>

Among the raw materials in the method for producing a resin composition according to the present disclosure, the thermoplastic resin is not limited as long as it is thermally melted and deformed by heating and can be mixed with not only an organic fibrous filler but also a glass filler, a glass fiber, and other inorganic fillers. The thermoplastic resin may be a mixture of two or more thermoplastic resins. Examples of the thermoplastic resin include, but are not limited to, polyethylene, polyvinyl chloride, polypropylene, polystyrene, acrylonitrile-butadiene-styrene, acrylonitrile-styrene, polymethyl methacrylate, polybutylene terephthalate, polyethylene terephthalate, polyamide, polyoxymethylene, polyvinyl alcohol, polyphenylene ether, polycarbonate, polyphenylene sulfide, aromatic polyether ketone, and polyimide. In particular, the softening temperature is preferably 150°C or higher and 250°C or lower from the viewpoint of the easiness in thermally melting during production and thermal stability during use. Furthermore, the thermoplastic resin is preferably reactive with a chemically active site generated by ring-opening of maleic anhydride, and from this viewpoint, preferably has an amino group, a hydroxyl group, a carboxyl group, a thiol group, an ester structure, an amide structure, a urea structure, an amine structure, or a cyano structure. From the above viewpoint, in the present disclosure, the thermoplastic resin is particularly preferably a polyamide and a polyester. Particularly preferable examples thereof include polybutylene terephthalate, polyethylene terephthalate, and nylon 6 and nylon 66, each of which is a polyamide.

### <Maleic anhydride structure-containing additive>

The maleic anhydride structure-containing additive is not limited as long as it has at least one maleic anhydride structure in one molecule. The maleic anhydride structure-containing additive is not limited to those described above. A maleic anhydride structure is ring-opened, and the ring-opened structure reacts with the thermoplastic resin, while another maleic anhydride structure included in the same molecule in which the above maleic anhydride structure is included is ring-opened, and the ring-opened structure reacts with another part of the thermoplastic resin so that the thermoplastic resins are chemically bonded with each other through a carbonyl group derived from the maleic anhydride structure, thereby forming a three-dimensional crosslinked structure, and improving the elastic modulus of the resin composition at high temperatures. Examples of the maleic anhydride structure-containing material that functions in this manner include a maleic anhydride-styrene copolymer, a maleic anhydride-vinyl acetate copolymer, a maleic anhydride-vinyl benzoate copolymer, poly(ethylene-alt-maleic anhydride), polypropylene-graft-maleic anhydride, poly (isobutylene-alt-maleic anhydride), poly(methylvinyl ether-alt-maleic anhydride), polystyrene-block-poly(ethylene-ran-butylene)-block-polystyrene-graft-maleic anhydride, (-)-2,3-bis[(2R,5R)-2,5-dimethylphosphorano]maleic anhydride, citraconic anhydride, and cyclobutane-1,2,3,4-tetracarboxylic dianhydride.

The amount of the maleic anhydride structure-containing material to be added can be 0.5 wt% or more and 7 wt% or less with respect to the total weight of the resin composition. When the amount is less than 0.5 wt%, the effect of improving the elastic modulus at high temperatures cannot be sufficiently obtained. When the amount is more than 7 wt%, the maleic anhydride structure that does not form a ring-opened structure and does not react with a part of the thermoplastic resin is included in a large amount. The non-reactive maleic anhydride structure becomes a foreign substance that does not function, and the foreign substance may serve as a starting point that causes cracks, which is not preferable. From the viewpoint that the maleic anhydride structure reacts with the thermoplastic resin in an appropriate amount, the amount is more preferably 1.25 wt% or more and 5 wt% or less.

### <Method for producing resin composition>

As the method for producing a resin composition according to the first exemplary embodiment, the thermoplastic resin and the maleic acid structure-containing material are mixed in a predetermined amount to obtain a mixture, and the mixture is thermally melted and mixed and then cooled. Thus, the resin composition can be produced. The mixing method includes: a method of weighing each composition in a container, a bag, or the like, and manually mixing the composition using a spatula or a bar-shaped jig that can be used for stirring; and a method of substantially uniformly mixing the composition using a rotary mixer such as a Henschel mixer. From the viewpoint of easily performing the above mixing step, the thermoplastic resin and the maleic acid structure-containing substance are preferably powder-like or pellet-like. The powder mixture that has been substantially uniformly mixed can be thermally melted and mixed by using a uniaxial kneader, a biaxial kneader, a roll kneader, a kneader, a Banbury mixer, or the like, and can be thermally melted and mixed by a combination thereof. After thermally melted and mixed, the mixture is cooled to a temperature at which the mixture can be pulverized. Thus, the resin composition according to the present disclosure can be obtained. In addition, other additives such as a pigment and a flame retardant can be appropriately added to the mixture to be thermally melted and mixed according to the application.

When the resin composition produced in this manner is molded and applied to, for example, industrial parts, the crosslinking reaction between the thermoplastic resins makes it possible to obtain an excellent molded body that can be elastically deformed to restore its shape at high temperatures at which a conventional resin molded body is plastically deformed when applied with a force.

### (Second exemplary embodiment)

### <Resin composition>

The resin composition of the second exemplary embodiment is a resin composition including an organic fibrous filler and a thermoplastic resin, the thermoplastic resin and the organic fibrous filler being chemically bonded to each other. The chemical bond between the thermoplastic resin and the organic fibrous filler includes a carbonyl group that is not based on the thermoplastic resin. Specifically, the carbonyl group is, for example, a part of an ester bond. The organic fibrous filler is, for example, a cellulose fiber. The cellulose fiber is included in a weight content of, for example, 30 wt% or more and 90 wt% or less in the entire resin composition. The thermoplastic resin may be the same as in the first exemplary embodiment, and for example, may have an amino group, and may be a polyamide.

### <Method for producing resin composition>

A method for producing a resin composition according to the present disclosure includes:
(A) a step of powder-mixing a thermoplastic resin, an organic fibrous filler, and a maleic anhydride structure-containing additive agent to obtain a powder mixture; and
(B) a step of thermally melting, and simultaneously stirring and kneading, the powder mixture to obtain a resin composition.

Another method for producing a resin composition according to the present disclosure includes:
(A0) a step of powder-mixing an organic fibrous filler and an epoxy group-containing alkoxysilane to produce an epoxy group-modified organic fibrous filler;
(A1) a step of powder-mixing a thermoplastic resin, the epoxy group-modified organic fibrous filler, and a maleic anhydride structure-containing additive agent to obtain a powder mixture; and
(B) a step of thermally melting, and simultaneously stirring and kneading, the powder mixture to obtain a resin composition.

### <(A) and (A1) Step of obtaining powder mixture>

The step of obtaining a powder mixture is a step of physically mixing a pellet-like thermoplastic resin, an organic fibrous filler, and a maleic anhydride structure-containing material that is, for example, a powder to obtain a physical mixture (powder mixture).

### <(B) Step of obtaining resin composition>

The step of obtaining a resin composition is a production process of heating and simultaneously kneading the physical mixture (powder mixture), for example, using an apparatus capable of thermally melting and mixing the mixture, such as a uniaxial kneader, a biaxial kneader, or a Banbury mixer. In the thermally melting process, for example, a terminal functional group or a part of a skeleton structure of the resin and an active site generated by ring-opening of the maleic anhydride structure react with each other so that the resin and the maleic anhydride structure-containing material are bonded to each other; and a hydroxyl group present on the surface of the organic fibrous filler and an active site generated by ring-opening of the maleic anhydride structure-containing material react with each other to form a chemical bond between the organic fibrous filler and the maleic anhydride structure. When a plurality of maleic anhydride structures is present in the maleic anhydride structure-containing material, a maleic anhydride structure other than the maleic anhydride structure bonded to the resin reacts with the organic fibrous filler so that the organic fibrous filler and the thermoplastic resin are chemically bonded with each other through a carbonyl group in an ester bond derived from the maleic anhydride structure, thereby forming a three-dimensional crosslinked structure between the organic fibrous filler and the thermoplastic resin. As in the first exemplary embodiment, a maleic anhydride structure other than the maleic anhydride structure bonded to the resin reacts with another part of the resin so that the thermoplastic resins are also chemically bonded with each other through a carbonyl group derived from the maleic anhydride structure, thereby forming a three-dimensional crosslinked structure also between the thermoplastic resins.

Hereinafter, the method for producing a resin composition will be described in detail.

### (1) Raw Material

### <Thermoplastic resin>

Among the raw materials in the method for producing a resin composition according to the second exemplary embodiment, the thermoplastic resin may be the same thermoplastic resin as in the first exemplary embodiment.

### <Organic fibrous filler>

As the organic fibrous filler, a known organic fibrous filler derived from a plant fiber can be used. Specifically, although the organic fibrous filler is not limited thereto, for example, cellulose, cellulose fiber, cellulose nanofiber, lignocellulose, lignocellulose fiber, lignocellulose nanofiber, pulp, rayon, acetate, cupra, cotton, hemp, jute fiber, and the like can be used. Among them, from the viewpoint that the surface structure is stable and easily modified, celluloses can be suitably used, and these fibrous fillers derived from a plant fiber may be mixed.

The length of the fibrous filler may be, for example, 50 nm or more and 500 µm or less. When the length is less than 50 nm, the fibrous filler severely aggregates, and becomes difficult to disperse during thermally melting and mixing. When the length is more than 500 µm, the composition has an excessively high viscosity during thermally melting, and becomes difficult to mold. From the viewpoint of achieving both suppression of aggregation and suppression of viscosity increase, the length is further preferably 100 nm or more and 100 µm or less.

The organic fibrous filler may be surface-modified in advance. From the viewpoint of easily reacting with the maleic anhydride structure-containing additive, alkoxysilanes such as an epoxy group-containing alkoxysilane and an amino group-containing alkoxysilane can be used as a surface modifier.

As the surface modification method, for example, the surface modification can be performed by a method of dispersing the organic fibrous filler in a solvent such as water or alcohol to obtain a dispersion, adding dropwise the alkoxysilane in a predetermined amount into the dispersion while stirring the same, and then heating the dispersion in a heating furnace to volatilize the solvent; a method of stirring and mixing the organic fibrous filler and the alkoxysilane in a known dry blending apparatus such as a Henschel mixer; or the like.

The amount of the alkoxysilane to be used for surface modification is not limited, but may be, for example, 0.1 wt% or more and 2 wt% or less with respect to the weight of the organic fibrous filler. When the amount is less than 0.1 wt%, the amount of the alkoxysilane is too small, and the effect of reacting with the maleic anhydride structure-containing additive due to surface modification is not sufficient. When the amount is more than 2 wt%, alkoxysilanes may react with each other to generate aggregates, thereby becoming a factor of inhibiting uniform dispersion of the organic fibrous filler.

When an organic fibrous filler whose surface is modified with an epoxy group or an amino group is used as described above, the epoxy group or the amino group easily reacts with the ring-opened structure of the maleic anhydride structure in the maleic anhydride structure-containing additive as described below, and a stronger three-dimensional crosslinked structure can be formed as compared with the case of using an organic fibrous filler that is not surface-modified.

### <Maleic anhydride structure-containing additive>

The maleic anhydride structure-containing additive may be the same maleic anhydride structure-containing additive as in the first exemplary embodiment. As in the first exemplary embodiment, in addition to the three-dimensional crosslinked structure formed between the thermoplastic resins, a maleic anhydride structure is ring-opened, and the ring-opened structure reacts with the thermoplastic resin, while another maleic anhydride structure included in the same molecule in which the above maleic anhydride structure is included is ring-opened, and the ring-opened structure reacts with a hydroxyl group on the organic fibrous filler, so that the thermoplastic resin and the organic fibrous filler are chemically bonded to each other, and the thermoplastic resin and the organic fibrous filler firmly adhere to each other to form a three-dimensional crosslinked structure, and the elastic modulus at high temperatures of the composite, that is, the resin composition, is improved.

The amount of the maleic anhydride structure-containing material to be added can be, for example, 0.5 wt% or more and 7 wt% or less with respect to the total weight of the resin composition, depending on the blending ratio of the organic fibrous filler with respect to the resin composition. When the amount is less than 0.5 wt%, the effect of improving the elastic modulus at high temperatures cannot be sufficiently obtained. When the amount is more than 7 wt%, the maleic anhydride structure that does not form a ring-opened structure and reacts with neither the organic fibrous filler nor a part of the thermoplastic resin is included in a large amount. The non-reactive maleic anhydride structure becomes a foreign substance that does not function, and the foreign substance may serve as a starting point that causes cracks, which is not preferable. From the viewpoint that the maleic anhydride structure reacts with the organic fibrous filler or the thermoplastic resin in an appropriate amount, the amount is more preferably 1.25 wt% or more and 5 wt% or less.

### <Method for producing resin composition>

As the method for producing a resin composition according to the second exemplary embodiment, the thermoplastic resin, the organic fibrous filler, and the maleic acid structure-containing material are mixed in a predetermined amount to obtain a mixture, and the mixture is thermally melted and mixed and then cooled. Thus, the resin composition can be produced. The mixing method includes: a method of weighing each composition in a container, a bag, or the like, and manually mixing the composition using a spatula or a bar-shaped jig that can be used for stirring; and a method of substantially uniformly mixing the composition using a rotary mixer such as a Henschel mixer. From the viewpoint of easily performing the above mixing step, the thermoplastic resin and the maleic acid structure-containing substance are preferably powder-like or pellet-like. The powder mixture that has been substantially uniformly mixed can be thermally melted and mixed by using a uniaxial kneader, a biaxial kneader, a roll kneader, a kneader, a Banbury mixer, or the like, and can be thermally melted and mixed by a combination thereof. After thermally melted and mixed, the mixture is cooled to a temperature at which the mixture can be pulverized. Thus, the resin composition according to the present disclosure can be obtained. In addition, other additives such as a pigment and a flame retardant can be appropriately added to the mixture to be thermally melted and mixed according to the application.

When the resin composition produced in this manner is molded and applied to, for example, industrial parts, the molded body is formulated with an organic fibrous filler to have a higher biomass degree than a conventional resin molded body, thereby contributing to the reduction of environment load, and at the same time, the crosslinking reaction between the organic fibrous filler and the thermoplastic resin and the crosslinking reaction between the thermoplastic resins make it possible to obtain an excellent molded body that can be elastically deformed to restore its shape at high temperatures at which a conventional resin molded body is plastically deformed when applied with a force.

Hereinafter, Examples 1 to 16 and Comparative Examples 1 to 3 will be specifically described.

### (Example 1)

### <Production of resin composition>

Prepared were 43.9 parts by weight of nylon 6, which is a kind of polyamide, as the thermoplastic resin, 55.0 parts by weight of a cellulose fiber (Nippon Paper Industries Co., Ltd. (KC FLOCK (W-100G)) as the organic fibrous filler, and 1.1 parts by weight of polypropylene-graft-maleic anhydride as the maleic anhydride structure-containing additive. These were put into one polyethylene container and stirred and mixed manually for 5 minutes using a spatula. Further, the mixture was thermally melted and mixed while being sequentially charged into a hopper portion of a biaxial kneader set at 260°C and being extruded at a shaft rotation speed of 100 rpm, and the melted mixture was recovered from the discharge port to obtain a resin composition according to Example 1.

### <Molecular structure analysis of resin composition>

The molecular structure of the resin composition was analyzed by AFM-IR measurement. A resin composition piece sliced with a microtome for TEM observation was observed with an optical microscope to determine an observation spot, and an AFM image and a reflection infrared absorption spectrum were measured at the spot, thereby analyzing the structure of the nano region.

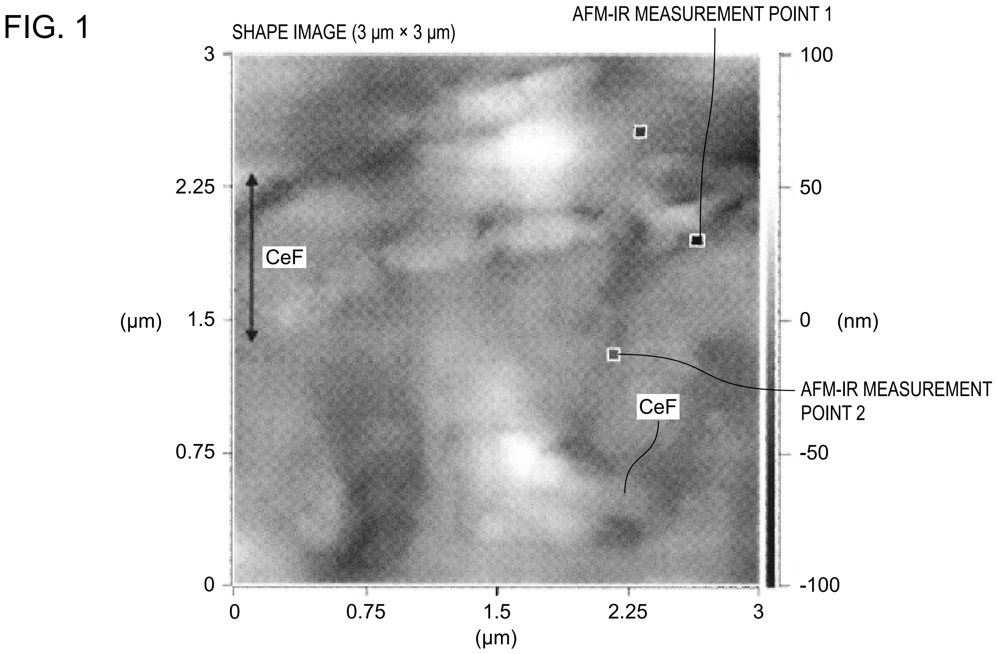

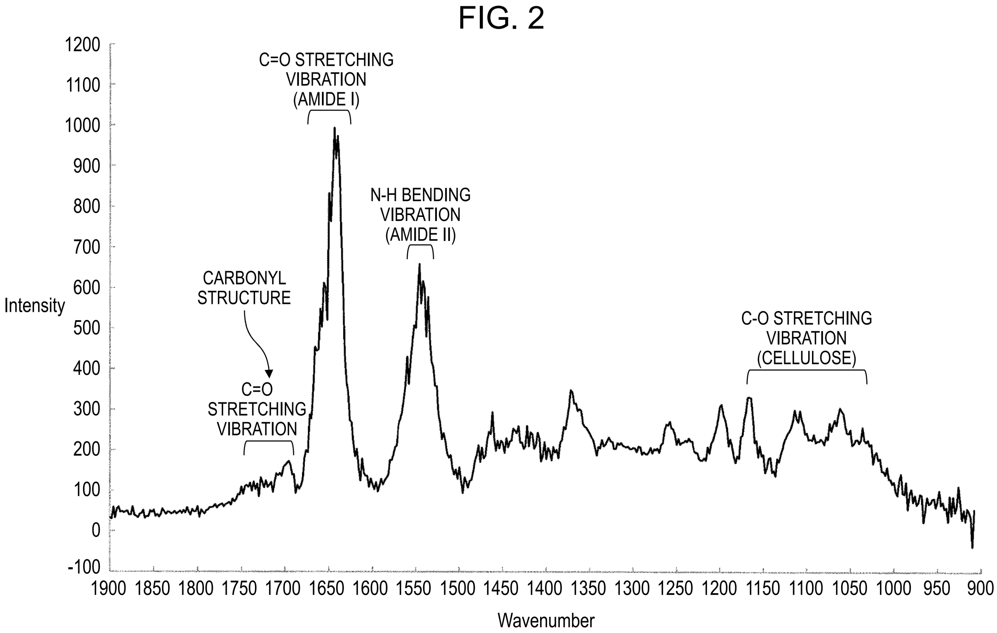

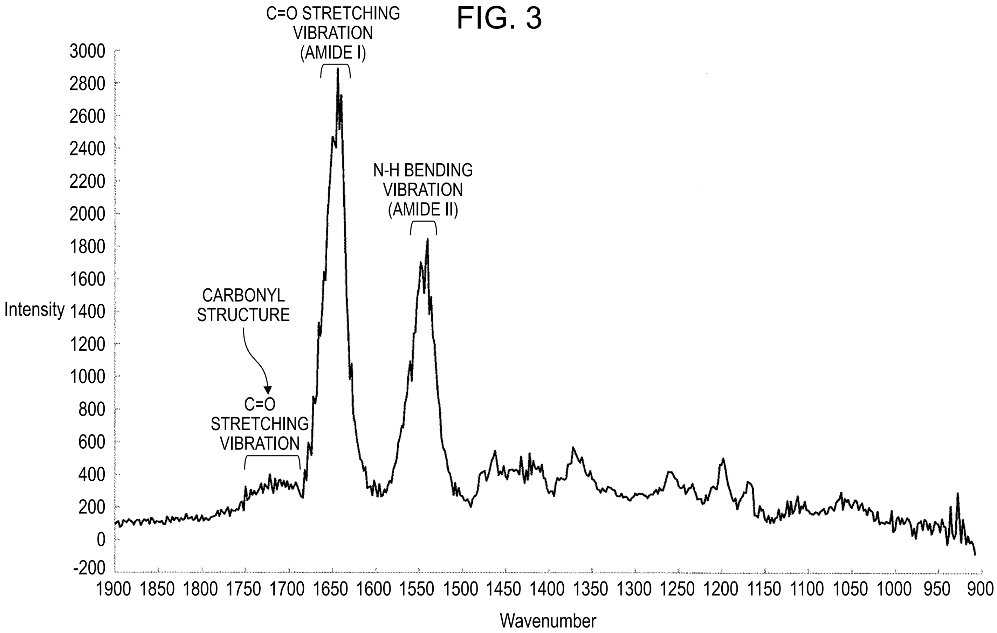

Fig. 1 is a view showing an example of AFM image of a resin composition in Example 1. Fig. 2 and Fig. 3 are views showing an example of AFM-IR measurement spectrum at AFM-IR measurement point 1 and AFM-IR measurement point 2 in the AFM image of the resin composition in Example 1 in Fig. 1. First, in the AFM image, the boundary between the maleic anhydride structure-containing additive and the resin is not clear. Therefore, it is found that the maleic anhydride structure-containing additive has chemically reacted. Further, it is found that the polyamide resin is impregnated between fibers of the cellulose fiber, and from Fig. 2 and Fig. 3, a peak of a carbonyl group not derived from the polyamide, which is a raw material resin, is confirmed in the resin phase. The present inventor considers that these features are formed by the following mechanism. That is, in the step of thermally melting and mixing, a maleic anhydride structure in a polypropylene-graft-maleic anhydride is ring-opened, and the ring-opened structure reacts with a hydroxyl group on the surface of the cellulose fiber. Furthermore, in the polypropylene-graft-maleic anhydride having the above maleic anhydride structure, the ring-opened structure of another maleic anhydride structure in the molecule reacts with an amino group at the polymer chain terminal of the polyamide. Thus, the cellulose fiber and the polyamide are chemically bonded to improve compatibility, and the polyamide resin is impregnated between fibers of the cellulose fiber. In addition, in the step of thermally melting and mixing, a maleic anhydride structure in a polypropylene-graft-maleic anhydride is ring-opened, and the ring-opened structure reacts with an amino group at a polymer chain terminal of the polyamide. Furthermore, in the polypropylene-graft-maleic anhydride having the above maleic anhydride structure, the ring-opened structure of another maleic anhydride structure in the molecule reacts with an amino group at another polymer chain terminal of the polyamide. Thereby, the polyamides are chemically bonded with each other, and a three-dimensional crosslinked structure is formed. The carbonyl group not derived from the polyamide confirmed in the spectrum by AFM-IR measurement results from an ester bond generated by the ring-opened structure of the maleic anhydride structure-containing additive, indicating that the cellulose fiber and the polyamide are chemically bonded with each other to form a three-dimensional crosslinked structure, and the polyamides also form a three-dimensional crosslinked structure.

### (Example 2)

Example 2 was carried out in the same manner as Example 1 except that an epoxy surface-modified organic fibrous filler was used as the organic fibrous filler. The epoxy surface-modified organic fibrous filler was produced by the following method.

### <Production of surface-modified organic fibrous filler>

In Example 2, the organic fibrous filler was a surface-modified organic fibrous filler, and the surface modification was performed with an epoxy group-containing alkoxysilane.
(1) Prepared were 1000 parts by weight of a cellulose fiber (Nippon Paper Industries Co., Ltd. (KC FLOCK (W-100G)) as the organic fibrous filler, and 50 parts by weight of 3-glycidoxypropyltrimethoxysilane (Shin-Etsu Chemical Co., Ltd. KBM403) as the epoxy group-containing alkoxysilane.
(2) The cellulose fiber was charged in a Henschel mixer, and 3-glycidoxypropyltrimethoxysilane was charged in a syringe.
(3) While stirring the cellulose fiber in the Henschel mixer at a rotation speed setting of 1000 rpm, the needle of the syringe was inserted through the syringe hole provided in the lid of the Henschel mixer to inject 3-glycidoxypropyltrimethoxysilane thereinto.
(4) After injecting the same, rotation was further continued for 10 minutes. After rotation was terminated, the epoxy surface-modified cellulose fiber was recovered from the inside of the Henschel mixer.

### (Example 3)

Example 3 was carried out in the same manner as Example 1 except that 98.9 parts by weight of nylon 6 as the thermoplastic resin was prepared, and the organic fibrous filler was not prepared.

### (Example 4)

Example 4 was carried out in the same manner as Example 2 except that 68.9 parts by weight of nylon 6 as the thermoplastic resin, and 30 parts by weight of the epoxy surface-modified cellulose fiber as the organic fibrous filler were prepared.

### (Example 5)

Example 5 was carried out in the same manner as Example 2 except that 8.9 parts by weight of nylon 6 as the thermoplastic resin, and 90.0 parts by weight of the epoxy surface-modified cellulose fiber as the organic fibrous filler were prepared.

### (Example 6)

Example 5 was carried out in the same manner as Example 2 except that 43.9 parts by weight of nylon 66, which is a kind of polyamide, were prepared as the thermoplastic resin.

### (Example 7)

Example 6 was carried out in the same manner as Example 2 except that 44.5 parts by weight of nylon 6 as the thermoplastic resin, and 0.5 parts by weight of polypropylene-graft-maleic anhydride as the maleic anhydride structure-containing additive were prepared.

### (Example 8)

Example 7 was carried out in the same manner as Example 2 except that 38.0 parts by weight of nylon 6 as the thermoplastic resin, and 7.0 parts by weight of polypropylene-graft-maleic anhydride as the maleic anhydride structure-containing additive were prepared.

### (Example 9)

Example 8 was carried out in the same manner as Example 2 except that 43.75 parts by weight of nylon 6 as the thermoplastic resin, and 1.25 parts by weight of polypropylene-graft-maleic anhydride as the maleic anhydride structure-containing additive were prepared.

### (Example 10)

Example 9 was carried out in the same manner as Example 2 except that 40.0 parts by weight of nylon 6 as the thermoplastic resin, and 5.0 parts by weight of polypropylene-graft-maleic anhydride as the maleic anhydride structure-containing additive were prepared.

### (Example 11)

Example 10 was carried out in the same manner as Example 1 except that poly(isobutylene-alt-maleic anhydride) was used as the maleic anhydride structure-containing additive.

### (Example 12)

Example 12 was carried out in the same manner as Example 1 except that an amino surface-modified cellulose fiber (Nippon Paper Industries Co., Ltd. (KC FLOCK (W-100G)) was used as the organic fibrous filler. The amino surface-modified cellulose fiber was produced in the same manner as the surface-modified organic fibrous filler was produced in Example 2, where 3-aminopropyltrimethoxysilane (Shin-Etsu Chemical Co., Ltd. KBM 903) was used as the amino group-containing alkoxysilane.

### (Example 13)

Example 13 was carried out in the same manner as Example 1 except that 73.9 parts by weight of nylon 6 as the thermoplastic resin, and 25.0 parts by weight of the epoxy surface-modified cellulose fiber as the organic fibrous filler were prepared.

### (Example 14)

Example 14 was carried out in the same manner as Example 1 except that 6.9 parts by weight of nylon 6 as the thermoplastic resin, and 92.0 parts by weight of the epoxy surface-modified cellulose fiber as the organic fibrous filler were prepared.

### (Example 15)

Example 14 was carried out in the same manner as Example 1 except that 44.7 parts by weight of nylon 6 as the thermoplastic resin, and 0.3 parts by weight of polypropylene-graft-maleic anhydride as the maleic anhydride structure-containing additive were prepared.

### (Example 16)

Example 15 was carried out in the same manner as Example 1 except that 36.0 parts by weight of nylon 6 as the thermoplastic resin, and 9.0 parts by weight of polypropylene-graft-maleic anhydride as the maleic anhydride structure-containing additive were prepared.

### (Comparative Example 1)

Comparative Example 1 was carried out in the same manner as Example 1 except that 45.0 parts by weight of nylon 6 as the thermoplastic resin, and 55.0 parts by weight of the cellulose fiber (Nippon Paper Industries Co., Ltd. (KC FLOCK (W-100G)) as the organic fibrous filler were prepared, and the maleic anhydride structure-containing additive was not added.

The molecular structure of the resin composition was analyzed in the same manner as in Example 1.

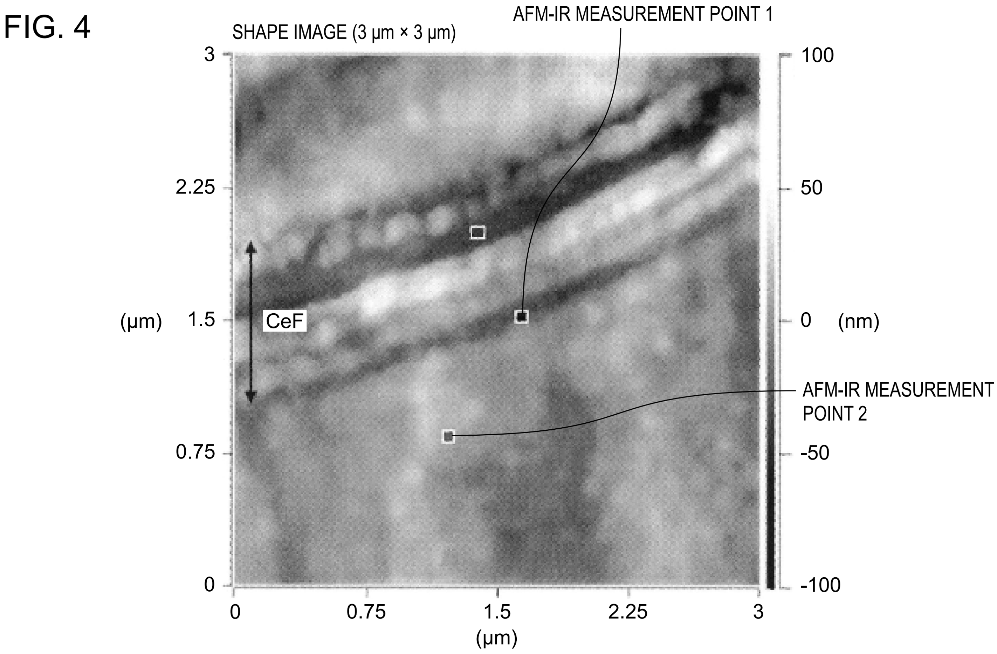

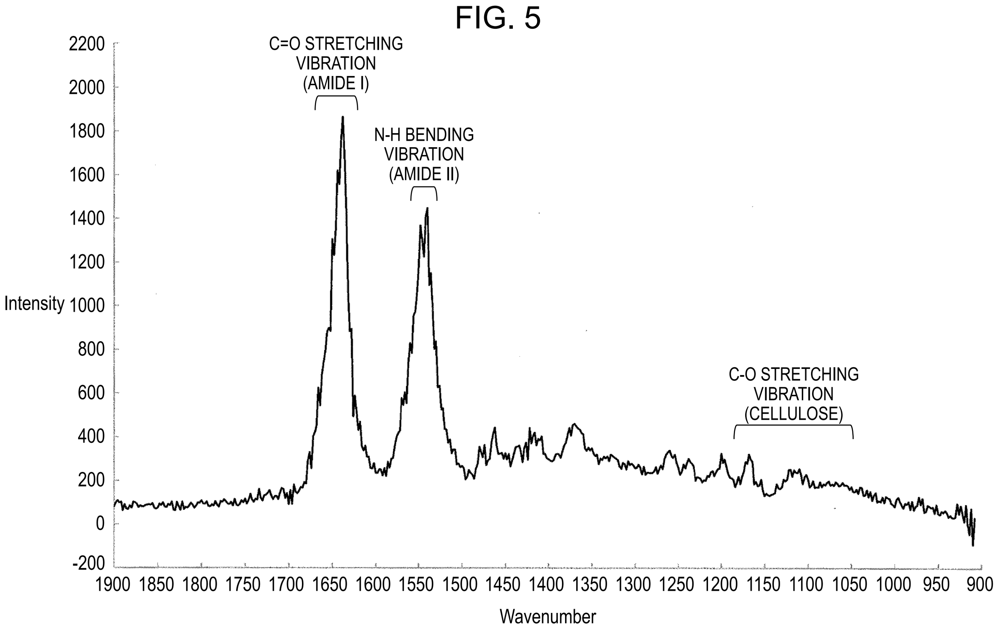

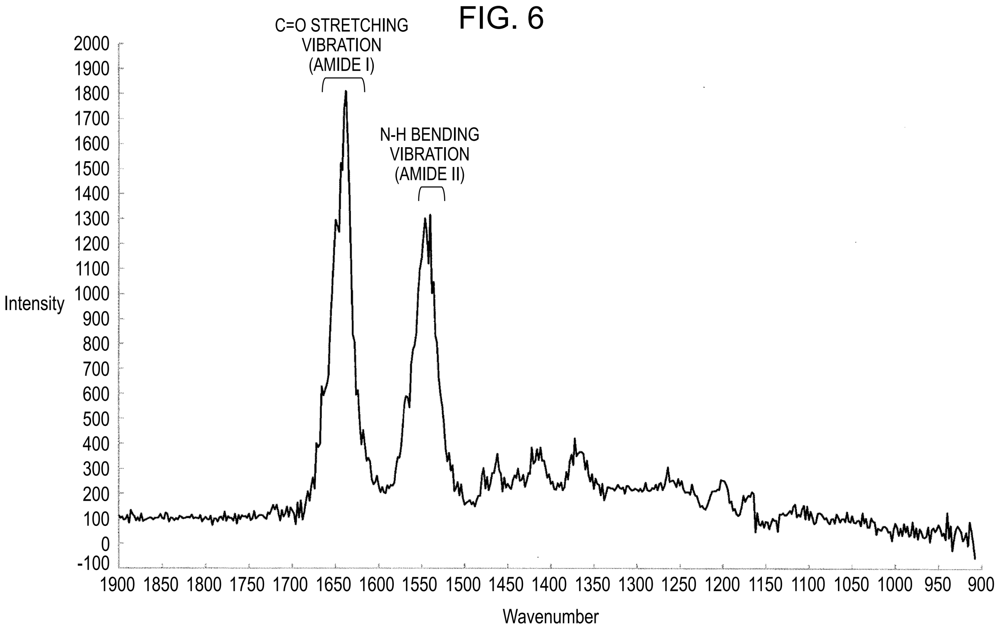

Fig. 4 is a view showing an example of AFM image of a resin composition in Comparative Example 1. Fig. 5 and Fig. 6 are views showing an example of AFM-IR measurement spectrum at AFM-IR measurement point 1 and AFM-IR measurement point 2 in the AFM image of the resin composition in Comparative Example 1 in Fig. 4. That is, in Fig. 4, the boundary between the cellulose fiber and the resin is confirmed, and the AFM-IR measurement spectrum at the interface is shown in Fig. 5. In Example 1, at the boundary between the cellulose fiber and the resin, a broad peak not derived from amide, which is specific to a carbonyl group derived from an ester bond, was confirmed as described above. However, such a peak was not confirmed in Fig. 5. The AFM-IR measurement spectrum inside the resin in Fig. 4 is shown in Fig. 6. Also inside the resin, a broad peak not derived from amide as described above, which is specific to a carbonyl group derived from an ester bond, is not confirmed. Therefore, it is found in Comparative Example 1 that the structure directly bonding the resin and the cellulose fiber and the three-dimensional crosslinked structure between the resins as each confirmed in Example 1 are not generated.

### (Comparative Example 2)

Comparative Example 2 was carried out in the same manner as Example 1 except that 55.0 parts by weight of the epoxy surface-modified cellulose fiber as the organic fibrous filler was prepared, and the maleic anhydride structure-containing additive was not added.

### (Comparative Example 3)

Comparative Example 3 was carried out in the same manner as Example 1 except that 100.0 parts by weight of nylon 6 was prepared as the thermoplastic resin, the organic fibrous filler was not prepared, and the maleic anhydride structure-containing additive was not added.

### <Molding of resin composition and evaluation of elastic deformation>

The resin composition according to the present disclosure can be injection-molded. The resin composition was pulverized with a pulverizer to form pellets, and the prepared pellets were used to prepare a dumbbell test piece of the resin composition with an injection molding machine (180AD, manufactured by The Japan Steel Works, Ltd.). The preparation conditions of the dumbbell test piece included a resin temperature of 240°C, a mold temperature of 80°C, an injection speed of 60 mm/s, and a holding pressure of 100 MPa. Regarding the shape of the test piece, JIS K7139 dumbbell type test piece type A was adopted for evaluating deformation and restoration. The test piece of the resin composition thus obtained was evaluated by the following method.

### (Evaluation of deformation and restoration at high temperature)

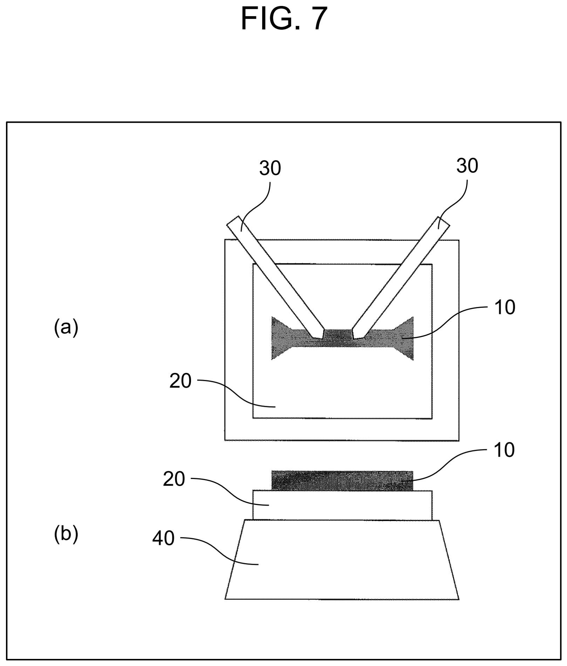

It was evaluated whether the obtained dumbbell test piece was deformed when heated and applied with a force, and whether the dumbbell test piece, if deformed, was restored to its original shape when the force is released therefrom. Part (a) of Fig. 7 is an overhead view illustrating an example of the evaluation method at a high temperature. Part (b) is a side view of Part (a). Dumbbell test piece 10 obtained was placed on heating plate 20 of a hot plate controlled to an arbitrary temperature by heating plate controller 40. After a lapse of 10 minutes, it was evaluated whether the obtained dumbbell test piece had a visually recognizable deformation when the obtained dumbbell test piece was applied with a compressive force and a tensile force in the long side direction using rod-shaped tool 30. In addition, when the test piece was deformed, restoring to the original shape when the force was released after deformation was rated as ○; particularly promptly restoring thereto was rated as ⊚; only partly restoring thereto was rated as △; and not restoring thereto was rated as ×.

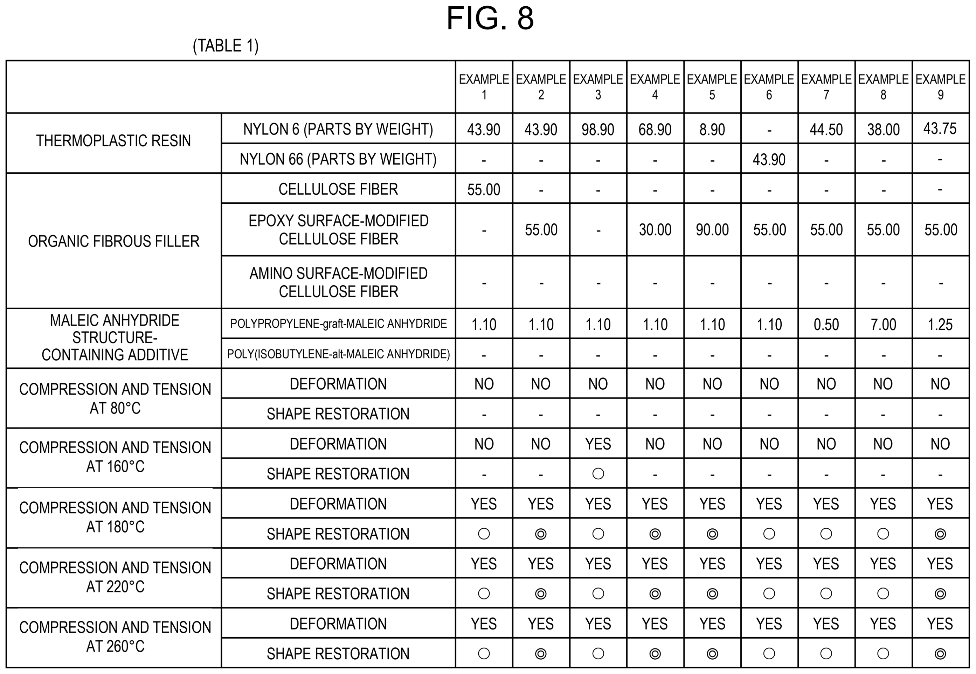

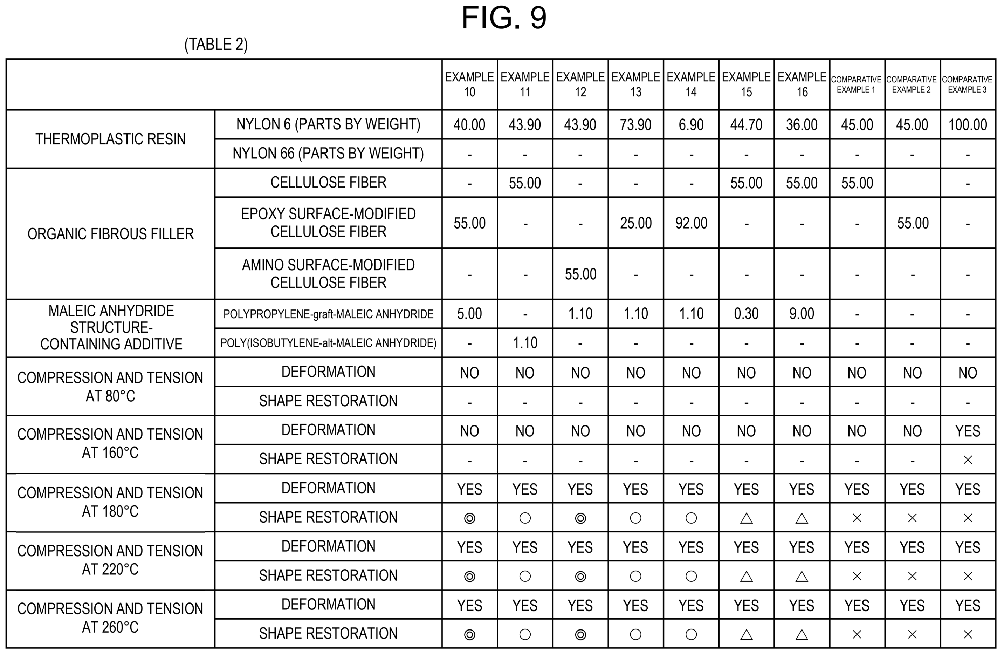

Table 1 in Fig. 8 shows the parts by weight of each raw material and evaluation results in Examples 1 to 9. Table 2 in Fig. 9 shows the parts by weight of each raw material and evaluation results in Examples 10 to 16 and Comparative Examples 1 to 3.

Comparison between Example 1 and Comparative Example 1 shows that adding a maleic anhydride structure-containing material leads to a resin composition having a high elastic modulus at high temperatures, in which, even when deformed at a high temperature of 180°C or more and 260°C or less, the shape is restored. In addition, it is found that, at 80°C, which is within the normal temperature range at which deformation does not occur even when a maleic anhydride structure-containing material is not added, deformation does not occur also when a maleic anhydride structure-containing material is added.

Example 1, Example 2, Example 12, and Comparative Example 2 show that, when a maleic anhydride structure-containing material is added and the surface of the cellulose fiber is appropriately modified, the effect is further remarkably exhibited, and the resin composition has a still higher elastic modulus at high temperatures.

Comparison between Example 3 and Comparative Example 3 shows that even when an organic fibrous filler is not added, adding a maleic anhydride structure-containing material leads to a resin composition having a high elastic modulus, in which, even when deformed at a high temperature, the shape is restored after the force is released therefrom.

The results of Example 4, Example 5, Example 13, and Example 14 show that the organic fibrous filler is preferably added in an amount of 30 wt% or more and 90 wt% or less, and the resin composition has a particularly higher elastic modulus at high temperatures.

Example 2 and Example 6 show that the resin applicable in the present disclosure can improve elastic modulus at high temperatures regardless of the type of polyamide.

Example 7, Example 8, Example 9, Example 10, Example 15, and Example 16 show that the maleic anhydride structure-containing material is added preferably in an amount of 0.5 wt% or more and 7 wt% or less, and particularly preferably in an amount of 1.25 wt% or more and 5 wt% or less.

Example 1 and Example 11 show that two or more maleic anhydride structure-containing materials can be used.

### INDUSTRIAL APPLICABILITY

As described above, the resin composition according to the present disclosure is excellent in elastic modulus at high temperatures, and can be applied to various industrial products capable of maintaining the shape even in a situation accompanied by temperature changes.

### REFERENCE MARKS IN THE DRAWINGS

- 10: dumbbell test piece
- 20: heating plate
- 30: tool
- 40: heating plate controller

## Claims

1. A resin composition comprising:
a thermoplastic resin; and
a carbonyl group that is not based on the thermoplastic resin,
wherein the thermoplastic resin and the carbonyl group are chemically bonded to each other.

2. The resin composition according to Claim 1, wherein, at 180°C or more and 260°C or less, the resin composition is deformed when a compressive force or a tensile force is applied, and then restored to a shape before the force is applied when the force is released.

3. The resin composition according to Claim 1 or 2, wherein the thermoplastic resin has an amino group.

4. The resin composition according to Claim 3, wherein the thermoplastic resin is a polyamide.

5. The resin composition according to Claim 1 or 2, comprising an organic fibrous filler, the thermoplastic resin and the organic fibrous filler being chemically bonded to each other,
wherein a chemical bond between the thermoplastic resin and the organic fibrous filler includes a carbonyl group that is not based on the thermoplastic resin.

6. The resin composition according to Claim 1 or 2, wherein the carbonyl group is a part of an ester bond.

7. The resin composition according to Claim 5, wherein the organic fibrous filler is a cellulose fiber.

8. The resin composition according to Claim 7, wherein the cellulose fiber is included in a weight content of 30 wt% or more and 90 wt% or less in the entire resin composition.
